# FASCICULE DE BREVET EUROPEEN

(11) **EP 2 591 579 B1**
(45) Date de publication et mention de la délivrance du brevet: **14.05.2014**
(21) Numéro de dépôt: 11741637.0
(22) Date de dépôt: 04.07.2011
(51) Int. Cl.: H04L 12/64, H04L 12/28

(54) **PROCEDE D'AUTO-CONFIGURATION D'UNE PASSERELLE DOMESTIQUE EN PRESENCE DE DIFFERENTS RESEAUX EXTERNES, ET PASSERELLE METTANT EN OEUVRE UN TEL PROCEDE**
VERFAHREN ZUR SELBSTKONFIGURATION EINES HEIM-GATEWAYS IN GEGENWART MEHRERER EXTERNER NETZWERKE UND GATEWAY MIT EINEM DERARTIGEN VERFAHREN
METHOD OF SELF-CONFIGURATION OF A DOMESTIC GATEWAY IN THE PRESENCE OF VARIOUS EXTERNAL NETWORKS, AND GATEWAY IMPLEMENTING SUCH A METHOD

(30) Priorité: 09.07.2010 FR 1055594
(43) Date de publication de la demande: 15.05.2013
(73) Titulaire: Softathome, 92000 Nanterre (FR)
(72) Inventeur: ROSSEEL, Jan, B-3270 Scherpenheuvel-Zichem (BE)
(74) Mandataire: Pontet Allano & Associes
(86) Numéro de dépôt international: PCT/FR2011/051567
(87) Numéro de publication internationale: WO 2012/004503

(56) Documents cités:
- US-A1- 2006 239 278

## Description

La présente invention concerne un procédé d'auto-configuration d'une passerelle domestique en présence de différents réseaux externes. Elle concerne également une passerelle domestique mettant en oeuvre un tel procédé. Un exemple de l'état de l'art se trouve dans US 2006/239278.

D'une façon générale, les opérateurs de services ont toujours déployé une unique configuration réseau mettant en oeuvre de multiples services tels que par exemple l'accès Internet, VoIP (voix sur IP, « Voice-over-IP ») et la télévision numérique. Pour les leaders télécom, ce déploiement de réseau généralement impliquait les technologies d'accès ADSL en utilisant des serveurs d'accès avec le protocole PPP (« point-to-point protocol ») pour contrôler l'accès au réseau et pour fournir une adresse IP publique à la passerelle domestique.

Actuellement, de multiples évolutions se produisent, et cela pousse les opérateurs à s'éloigner de leur stratégie de déploiement traditionnel et d'introduire de nouvelles technologies d'accès. D'autres exemples de technologies sont:
- les technologies d'accès: dans la course pour offrir des vitesses d'accès qui dépassent les technologies ADSL2+, les opérateurs sont obligés de déployer des combinaisons de technologies d'accès à haut-débit car il n'existe pas de technologie unique pouvant être déployée à moindre coût et de manière très rapide. D'autres technologies sont en cours de déploiement : VDSL, fibre GPON et câble DOCSIS 3.0.
- les technologies d'accès redondant: la technologie « dial-on-demand » a longtemps été remplacée par la technologie d'accès « always-on ». Avec une telle évolution ainsi que des services essentiels déployés comme la VoIP, les utilisateurs ont clairement intégré l'accès Internet 24/7 et l'accès à d'autres services. Cela oblige les opérateurs à déployer des technologies d'accès secondaire telles que la 3G ou WiMAX comme solutions de secours pour garantir la continuité en cas de rupture sur l'accès à haut débit primaire.
- contrôle d'accès / allocation d'adresse IP (« IP Provisioning »): le protocole PPP est une méthode populaire pour attribuer une adresse IP publique à des passerelles pour de l'Internet commuté. Dans le cadre des technologies de type « always-on », des méthodes plus efficaces tels que le DHCP sont préférables.
- la transition IPv4 vers IPv6: comme les adresses IPv4 deviennent rares, la transition vers le IPv6 devient nécessaire. Compte tenu de l'existant, une transition abrupte n'est pas possible, et les deux protocoles de réseau devront donc coexister pendant une longue période.

Dans cet environnement en mutation, les passerelles domestiques en cours de déploiement doivent donc être capables d'être configuré pour fonctionner correctement dans toutes ces configurations.

Un but de la présente invention est de proposer un procéder permettant à une passerelle domestique de s'adapter à des environnements d'exploitation multiples.

Un autre but de l'invention est de palier toute défaillance d'une connexion à un réseau opérateur.

On atteint au moins l'un des objectifs avec un procédé de configuration automatique d'une passerelle domestique (« home gateway ») permettant à un appareil réseau domestique d'accéder à des services sur différents réseaux externes, cette passerelle domestique comportant plusieurs interfaces réseaux pour la connexion aux différents réseaux externes.

Selon l'invention, pour chaque service, la passerelle comporte une première liste d'interfaces réseaux dites interfaces primaires et une seconde liste d'interfaces réseaux dites interfaces secondaires,
A) à chaque démarrage de la passerelle, on analyse successivement les listes primaires desdits services en réalisant les étapes suivantes pour chaque liste primaire et pour chaque interface primaire:
   a) on vérifie l'état de connexion physique de l'interface primaire de façon à détecter un réseau externe, si aucun réseau n'est détecté, on passe à l'interface primaire suivante ;
   b) on initie un processus pour obtenir une adresse IP pour la passerelle dans le réseau externe détecté, si aucune adresse IP n'est obtenue, on passe à l'interface primaire suivante ;
   c) on initie un processus pour obtenir des données de routage, si aucune donnée de routage n'est obtenue on passe à l'interface primaire suivante ;
   d) on initie un processus pour obtenir une liste de serveurs DNS sur le réseau externe détecté, puis on passe à l'interface primaire suivante ;
B) après analyse des listes primaires et lorsqu'un service donné est disponible via une interface primaire, en fonctionnement normal par exemple, on analyse en parallèle ou de façon séquentielle les interfaces secondaires de la liste secondaire correspondant au service disponible,; pour chaque interface secondaire, on réalise les étapes suivantes :
   a) on active l'interface secondaire si elle est de type « always-on »,
   b) on vérifie à intervalles réguliers si le service est toujours disponible via l'interface primaire,
   c) si l'interface primaire devient indisponible, alors
      i) on active l'interface secondaire si elle est de type « dial-on-demand »
      ii) on reconfigure des entrées de routage et les serveurs DNS si nécessaire de façon à utiliser l'interface secondaire,
   d) on contrôle l'état de l'interface primaire, si elle redevient disponible pendant une durée prédéterminée :
      i) on reconfigure les entrées de routage et les serveurs DNS si necéssaire de façon à utiliser l'interface primaire, et
      ii) on désactive l'interface secondaire si elle est de type « dial-on-demand ».

L'étape A est prévue pour être exécutée à chaque démarrage de la passerelle et l'étape B est prévue pour être exécutée en permanence lorsque la passerelle est en fonctionnement.

Avec le procédé selon la présente invention, on réalise une configuration automatique du routage et des services de la passerelle lorsque l'on est en présence d'une pluralité de configurations de réseaux externes. Ces configurations de réseaux externes comprennent, de façon non limitative, les technologies de réseau physique (comme l'ADSL, fibre optique, ou câble coaxial, etc), des topologies de réseaux virtuels et des solutions alternatives d'allocation d'accès. Les éléments configurés automatiquement sur la passerelle domestique incluent, mais pas uniquement, l'allocation d'adresse IP, configuration de table de routage, allocation de service VoIP et configurations IPTV.

Le procédé selon l'invention permet avantageusement de basculer momentanément et de façon automatique d'un premier type de réseau vers un second type de réseau lorsque le premier type de réseau subit une défaillance momentanée. Lors de l'analyse parallèle ou séquentielle, l'interface secondaire qui sera retenue est la première interface secondaire détectée comme disponible pour permettre l'accès au service en question.

Avec une configuration automatique, on évite tout déplacement de techniciens pour une intervention à domicile et cela réduit considérablement les coûts du service après vente des opérateurs.

Par « appareil réseau domestique », on entend tout dispositif qui est capable de communiquer avec des réseaux externes par l'intermédiaire d'une passerelle domestique quel que soit les moyens de connectivité utilisés entre cet appareil et la passerelle domestique. Ces moyens de connectivité comprennent, de façon non limitative, un réseau Ethernet, un réseau WiFi, une connexion Bluetooth, une connexion de type CAT-iq, etc... Par conséquent, le terme « réseau domestique » peut désigner l'ensemble des réseaux et des technologies de connectivité utilisées pour connecter des appareils de réseau domestique à des réseaux externes par l'intermédiaire d'une passerelle domestique.

Par « réseau externe », on entend un réseau opérateur qui devient accessible à des appareils réseaux domestiques grâce à la connectivité externe offerte par la passerelle domestique. Cette connectivité externe est fournie par, de façon non limitative, des technologies telles que xDLS, FTTx, Ethernet, Docsis, 3G, etc... Le réseau externe physique peut en outre être subdivisé en plusieurs réseaux virtuels en utilisant par exemple le marquage VLAN, ou l'utilisation de l'ATM PVC.

Par « interface réseau », on entend tout moyen physique par lequel la passerelle domestique peut envoyer ou recevoir des données vers / depuis le réseau opérateur en utilisant des technologies comme xDLS, FTTx, Ethernet, Docsis, 3G, etc...

L'expression "service réseau" désigne tous services qui sont offerts ou supportés dans le réseau opérateur. Cela inclut, de façon non limitative, la téléphonie Internet, la télévision numérique, l'accès Internet et services de stockage opérateur.

Le terme «contrôle d'accès » désigne tout moyen utilisé par l'opérateur pour fournir une adresse IP permettant l'accès à Internet ou accédant à des services réseaux spécifiques de l'opérateur.

Selon l'invention, pour permettre la configuration automatique, pour chaque service réseau de l'opérateur prévu, la passerelle domestique stocke des listes décrivant des interfaces primaires et des méthodes de contrôle d'accès. On stocke également des données de configuration pour chaque interface réseau primaire détecté. Au démarrage, ou à intervalles de temps réguliers, l'appareil domestique tente de détecter (de façon successive) la présence desdites interfaces primaires et tente d'accéder à des réseaux détectés. Lorsqu'un réseau a été détecté avec succès, le balayage pour analyser le réseau cesse, et la passerelle domestique appliquera les données de configuration stockées dans une entrée de détection correspondante.

On prévoit avantageusement une seconde liste comprenant des méthodes de contrôle d'accès et des interfaces secondaires pour chaque service réseau disponible. Les méthodes de contrôle d'accès sont utilisées lorsqu'un service réseau devient indisponible sur une interface primaire. Les interfaces secondaires sont des interfaces réseaux de secours. Une telle liste secondaire peut être définie pour chaque service réseau défini. Les données de configuration des réseaux de secours comprennent également des informations sur des intervalles de temps entre lesquelles on doit vérifier l'interface primaire. Ces données de configuration comprennent également des informations relatives au moment où il faut activer ou désactiver telle ou telle interface secondaire.

Selon une caractéristique avantageuse de l'invention, à l'étape Aa) on détecte la présence d'un sous-réseau virtuel, si ce sous-réseau virtuel n'est pas présent, on passe à l'interface primaire suivante. Par ailleurs, pour la détection d'un sous-réseau externe, on peut envoyer un « ping » via l'interface en cours. L'utilisation d'un "ping" (IP ICMP, ATM OAM, ...) permet d'envoyer un paquet à un serveur spécifique pour déclencher une réponse afin de détecter le sous-réseau virtuel.

A l'étape Ab), le processus pour obtenir une adresse IP peut être réalisé par détection automatique d'adresse IP dans le réseau externe détecté en utilisant notamment le protocole PPP, DHCP ou autre. On peut aussi tout simplement récupérer une adresse IP statique préconfigurée.

De la même manière, à l'étape Ac), le processus pour obtenir des données de routage peut être réalisé par détection automatique d'adresse de routage dans le réseau externe détecté en utilisant notamment le protocole PPP, DHCP ou autre. On peut également tout simplement récupérer des données de routage statiques préconfigurées.

A l'étape Ad) également, le processus pour obtenir une liste de serveurs DNS peut être réalisé par détection automatique de paramètres DNS dans le réseau externe détecté en utilisant notamment le protocole PPP, DHCP ou autre. On peut aussi utiliser des serveurs DNS définis de façon statique.

Avantageusement, à l'étape Aa), pour la détection du réseau externe, on vérifie en outre l'état de lien physique de chaque interface réseau de la passerelle.

Selon l'invention, on détecte la présence de dispositifs de contrôle d'accès aux réseaux externes et on tente une opération d'accès et/ou d'authentification de façon à améliorer la détection de réseau au niveau des interfaces.

Il est également proposé un dispositif utilisé comme passerelle domestique permettant à un appareil réseau domestique d'accéder à des services sur différents réseaux externes, cette passerelle domestique comportant plusieurs interfaces réseaux pour la connexion aux différents réseaux externes, ce dispositif comprenant au moins un processeur numérique et des espaces mémoires stockant une application logicielle qui, lors de son exécution par le processeur numérique, configure de façon automatique la passerelle domestique en mettant en oeuvre un procédé tel que défini ci-dessus.

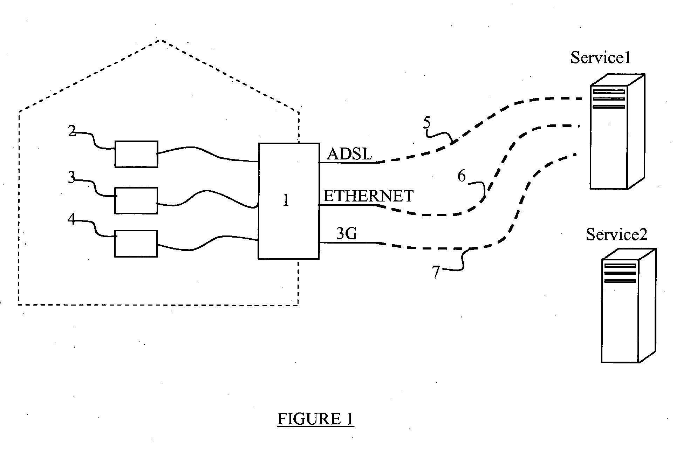

D'autres avantages et caractéristiques de l'invention apparaîtront à l'examen de la description détaillée d'un mode de mise en oeuvre nullement limitatif, et de l'unique figure 1 annexée illustrant un schéma simplifié d'un système pour la mise en oeuvre d'un procédé selon l'invention.

On distingue une passerelle domestique 1 qui permet à des appareils réseau domestique 2, 3 et 4 de se connecter à des services Service1 et Service2 par exemple offerts par un opérateur réseau via différentes configurations réseaux. Ces différentes configurations peuvent être de type physique, matériel, ou de type protocolaire.

Les appareils réseau domestiques comprennent non seulement des ordinateurs personnels, mais aussi de nombreux autres dispositifs de communication comme les téléphones mobiles, assistants numériques personnels, consoles de jeux, lecteurs de musique, ordinateurs tablettes, les dispositifs réseau de stockage, les décodeurs numériques, TV connecté à Internet, etc

La passerelle 1 comporte plusieurs interfaces réseaux : une interface ADSL, une interface Ethernet et une interface 3G. Chacune de ces interfaces permettent de connecter la passerelle 1 au service Service1 via l'une des trois types de réseaux 5, 6 ou 7. Ces types de réseaux peuvent par exemple être le réseau Internet associé à des moyens matériels et applicatifs côté utilisateur pour adapter la communication Internet à la bonne interface ADSL, Ethernet ou 3G.

Selon l'invention, pour le service Service1 par exemple, la liste primaire peut être constituée des trois interfaces ADSL, Ethernet et 3G. La liste secondaire peut être constituée uniquement des interfaces Ethernet et 3G.

Au démarrage de la passerelle selon l'invention, on scrute toutes les listes primaires : liste primaire relative au Service1 et liste primaire relative au Service2.

Pour la liste primaire du Service1. On vérifie l'état de connexion physique de l'interface primaire de façon à détecter un réseau externe, en particulier on cherche à détecter la disponibilité du réseau 5. Pour l'interface ADSL, cette vérification consiste notamment à détecter la disponibilité de la ligne, est-elle synchronisée, et à quel débit. Pour l'interface Ethernet on pourrait détecter si le câble est bien connecté et à quel vitesse (10/100Mbps).

Si par exemple le réseau via l'interface ADSL est disponible, on vérifie également la présence d'un éventuel sous réseau virtuel. On peut ensuite déterminer une adresse IP, une adresse de routage et des paramètres DNS, par détection automatique en utilisant notamment la technologie PPP, DHCP ou autre. Lorsque l'interface ADSL est convenablement configurée, l'un des appareils 2, 3 ou 4 peut accéder au Service1 via la passerelle 1 et l'interface ADSL.

Cependant, lorsque la liaison via cette interface primaire ADSL est coupée pour une quelconque raison comme par exemple des travaux sur la chaussée avec une coupure physique de câble, le procédé selon l'invention permet de détecter ce dysfonctionnement et de mettre en place un processus de secours où l'on analyse la liste secondaire relative au Service1. On effectue une recherche d'interfaces secondaires disponibles. On peut analyser en parallèle les interfaces Ethernet et 3G ou de façon séquentielle.

Préalablement on aura pris soin d'activer les interfaces secondaires qui sont susceptibles d'être activées. Par exemple, on peut activer l'interface 3G sans pour autant autoriser des transferts de données.

Si pendant l'analyse de la liste secondaire, on s'aperçoit que l'interface 3G est la première disponible, on reconfigure les adresses IP, adresses de routage et paramètres DNS de façon à basculer la liaison au Service1 via l'interface 3G.

En parallèle, on continue à surveiller l'état de connexion de l'interface primaire. Dès que l'interface primaire ADSL redevient opérationnelle, pendant une durée prédéterminée, on bascule à nouveau la liaison au Service1 vers cette interface primaire. On assure ainsi une continuité dans l'offre des services.

La présente invention concerne donc un procédé permettant de détecter de façon automatique la présence de réseaux externes et de fournir des services « multi-play » convenablement configurés en amont de ces réseaux externes. Ce procédé comprend également un processus de secours en cas de défaillance d'une interface réseau.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de configuration automatique d'une passerelle domestique, « home gateway », permettant à un appareil réseau domestique d'accéder à des services sur différents réseaux externes, cette passerelle domestique comportant plusieurs interfaces réseaux pour la connexion aux différents réseaux externes,
**caractérisé en ce que** pour chaque service, la passerelle comporte une première liste d'interfaces réseaux dites interfaces primaires et une seconde liste d'interfaces réseaux dites interfaces secondaires,
A) à chaque démarrage de la passerelle, on analyse successivement les listes primaires desdits services en réalisant les étapes suivantes pour chaque liste primaire et pour chaque interface primaire:
a) on vérifie l'état de connexion physique de l'interface primaire de façon à détecter un réseau externe, si aucun réseau n'est détecté, on passe à l'interface primaire suivante ;
b) on initie un processus pour obtenir une adresse IP pour la passerelle dans le réseau externe détecté, si aucune adresse IP n'est obtenue, on passe à l'interface primaire suivante ;
c) on initie un processus pour obtenir des données de routage, si aucune donnée de routage n'est obtenue on passe à l'interface primaire suivante ;
d) on initie un processus pour obtenir une liste de serveurs DNS sur le réseau externe détecté, on passe à l'interface primaire suivante ;
B) après analyse des listes primaires et lorsqu'un service donné est disponible via une interface primaire, on analyse en parallèle ou de façon séquentielle les interfaces secondaires de la liste secondaire correspondant au service disponible, ces interfaces secondaires ne comprenant pas l'interface primaire utilisé par le service donné ; pour chaque interface secondaire, on réalise les étapes suivantes :
a) on active l'interface secondaire si elle est de type « always-on »,
b) on vérifie à intervalles réguliers si le service est toujours disponible via l'interface primaire,
c) si l'interface primaire devient indisponible, alors
i) on active l'interface secondaire si elle est de type « dial-on-demand »
ii) on reconfigure des entrées de routage et les serveurs DNS si nécessaire de façon à utiliser l'interface secondaire,
d) on contrôle l'état de l'interface primaire, si elle redevient disponible pendant une durée prédéterminée :
i) on reconfigure les entrées de routage et les serveurs DNS si necéssaire de façon à utiliser l'interface primaire, et
ii) on désactive l'interface secondaire si elle est de type « dial-on-demand ».

2. Procédé selon la revendication 1, **caractérisé en ce qu'**à l'étape Aa) on détecte la présence d'un sous-réseau virtuel, si ce sous-réseau virtuel n'est pas présent, on passe à l'interface primaire suivante.

3. Procédé selon la revendication 2, caractérisé en que pour la détection d'un sous-réseau externe, on envoie un « ping » via l'interface en cours.

4. Procédé selon l'une quelconque des revendications précédentes, **caractérisé en ce qu'**à l'étape Ab), le processus pour obtenir une adresse IP est réalisé par détection automatique d'adresse IP dans le réseau externe détecté en utilisant notamment le protocole PPP, DHCP ou autre.

5. Procédé selon l'une quelconque des revendications 1 à 3, **caractérisé en ce qu'**à l'étape Ab), le processus pour obtenir une adresse IP consiste à récupérer une adresse IP statique préconfigurée.

6. Procédé selon l'une quelconque des revendications précédentes, **caractérisé en ce qu'**à l'étape Ac), le processus pour obtenir des données de routage est réalisé par détection automatique d'adresse de routage dans le réseau externe détecté en utilisant notamment le protocole PPP, DHCP ou autre.

7. Procédé selon l'une quelconque des revendications 1 à 5, **caractérisé en ce qu'**à l'étape Ac), le processus pour obtenir des données de routage consiste à récupérer des données de routage statiques préconfigurées.

8. Procédé selon l'une quelconque des revendications précédentes, **caractérisé en ce qu'**à l'étape Ad), le processus pour obtenir une liste de serveurs DNS est réalisé par détection automatique de paramètres DNS dans le réseau externe détecté en utilisant notamment le protocole PPP, DHCP ou autre.

9. Procédé selon l'une quelconque des revendications 1 à 7, **caractérisé en ce qu'**à l'étape Ad), le processus pour obtenir une liste de serveurs DNS consiste à utiliser des serveurs DNS définis de façon statique.

10. Procédé selon l'une quelconque des revendications précédentes, **caractérisé en ce qu'**à l'étape Aa), pour la détection du réseau externe, on vérifie l'état de lien physique de chaque interface réseau de la passerelle.

11. Procédé selon l'une quelconque des revendications précédentes, **caractérisé en ce que** pour améliorer la détection de réseau, on détecte la présence de dispositifs de contrôle d'accès aux réseaux externes et on tente une opération d'accès et/ou d'authentification.

12. Dispositif utilisé comme passerelle domestique permettant à un appareil réseau domestique d'accéder à des services sur différents réseaux externes, cette passerelle domestique comportant plusieurs interfaces réseaux pour la connexion aux différents réseaux externes, ce dispositif comprenant au moins un processeur numérique et des espaces mémoires stockant une application logicielle qui, lors de son exécution par le processeur numérique, configure de façon automatique la passerelle domestique en mettant en oeuvre un procédé selon l'une quelconque des revendications précédentes.

## Patentansprüche

1. Verfahren zur automatischen Konfiguration eines Home-Gateways, das einem Heimnetzwerkgerät erlaubt, auf Dienstleistungen auf verschiedenen externen Netzwerken zuzugreifen, wobei dieses Home-Gateway mehrere Netzwerkschnittstellen für die Verbindung mit verschiedenen externen Netzwerken umfasst,
**dadurch gekennzeichnet, dass** das Gateway für jede Dienstleistung eine erste Liste mit Netzwerkschnittstellen, genannt Primärschnittstellen, und eine zweite Liste mit Netzwerkschnittstellen, genannt Sekundärschnittstellen, umfasst,
A) bei jedem Start des Gateways nacheinander die Primärlisten der Dienstleistungen analysiert werden, indem die folgenden Schritte für jede Primärliste und jede Primärschnittstelle durchgeführt werden:
a) man verifiziert den Zustand der physischen Verbindung der Primärschnittstelle, um ein externes Netzwerk zu orten, wenn kein Netzwerk geortet wird, geht man zur folgenden Primärschnittstelle;
b) man initiiert einen Prozess, um eine IP-Adresse für das Gateway im georteten externen Netzwerk zu erhalten, wenn keine IP-Adresse erhalten wird, geht man zur folgenden Primärschnittstelle;
c) man initiiert einen Prozess, um Routingdaten zu erhalten, wenn keine Routingdaten erhalten werden, geht man zur folgenden Primärschnittstelle;
d) man initiiert einen Prozess, um eine DNS-Server-Liste über das geortete externe Netzwerk zu erhalten, man geht zur folgenden Primärschnittstelle weiter;
B) nach der Analyse der Primärlisten und wenn eine gegebenen Dienstleistung über eine Primärschnittstelle verfügbar ist, analysiert man parallel oder sequentiell die Sekundärschnittstellen der Sekundärliste, die der verfügbaren Dienstleistung entspricht, wobei diese Sekundärschnittstellen nicht die für die gegebene Dienstleistung verwendete Primärschnittstelle umfassen; für jede Sekundärschnittstelle führt man die folgenden Schritte durch:
a) man aktiviert die Sekundärschnittstelle, wenn sie vom Typ "always-on" ist,
b) man verifiziert in regelmäßigen Intervallen, ob die Dienstleistung über die Primärschnittstelle immer noch verfügbar ist;
c) wenn die Primärschnittstelle unverfügbar wird, dann
i) aktiviert man die Sekundärschnittstelle, wenn sie vom Typ "dial-on-demand" ist,
ii) rekonfiguriert, falls notwendig, die Routingeingaben und die DNS-Server, um die Sekundärschnittstelle zu benutzen,
d) man kontrolliert den Zustand der Primärschnittstelle, wenn sie während einer vorgegebenen Dauer wieder verfügbar wird,
i) rekonfiguriert man, falls notwendig, die Routingeingaben und die DNS-Server, um die Primärschnittstelle zu benutzen, und
ii) man deaktiviert die Sekundärschnittstelle, wenn sie vom Typ "dial-on-demand" ist.

2. Verfahren nach Anspruch 1, **dadurch gekennzeichnet, dass** man im Schritt Aa) das Vorhandensein eines virtuellen Unternetzwerkes ortet, wenn das virtuelle Unternetzwerk nicht vorhanden ist, geht man zur folgenden Primärschnittstelle.

3. Verfahren nach Anspruch 2, **dadurch gekennzeichnet, dass** man für das Orten eines externen Unternetzwerkes ein "ping" über die gegenständliche Schnittstelle absendet.

4. Verfahren nach einem der vorhergehenden Ansprüche, **dadurch gekennzeichnet, dass** im Schritt Ab) der Prozess zum Erhalt einer IP-Adresse als automatische Ortung einer IP-Adresse im georteten externen Netzwerk insbesondere unter Verwendung des PPP-, DHCP- oder eines anderen Protokolls durchgeführt wird.

5. Verfahren nach einem der Ansprüche 1 bis 3, **dadurch gekennzeichnet, dass** im Schritt Ab) der Prozess zum Erhalt einer IP-Adresse darin besteht, eine vorkonfigurierte statische IP-Adresse wieder zu verwenden.

6. Verfahren nach einem der vorhergehenden Ansprüche, **dadurch gekennzeichnet, dass** im Schritt Ac) der Prozess zum Erhalt von Routingdaten durch automatische Ortung einer Routingadresse im georteten externen Netzwerk insbesondere unter Verwendung des PPP-, DHCP- oder eines anderen Protokolls durchgeführt wird.

7. Verfahren nach einem der Ansprüche 1 bis 5, **dadurch gekennzeichnet, dass** im Schritt Ac) der Prozess zum Erhalt der Routingdaten darin besteht, vorkonfigurierte statische Routingdaten wieder zu verwenden.

8. Verfahren nach einem der vorhergehenden Ansprüche, **dadurch gekennzeichnet, dass** im Schritt Ad) der Prozess zum Erhalt einer DNS-Server-Liste durch automatische Ortung von DNS-Parametern im georteten externen Netzwerk insbesondere unter Verwendung des PPP-, DHCP- oder eines anderen Protokolls durchgeführt wird.

9. Verfahren nach einem der Ansprüche 1 bis 7, **dadurch gekennzeichnet, dass** im Schritt Ad) der Prozess zum Erhalt der DNS-Server-Liste darin besteht, auf statische Weise definierte DNS-Server zu verwenden.

10. Verfahren nach einem der vorhergehenden Ansprüche, **dadurch gekennzeichnet, dass** man im Schritt Aa) für die Ortung des externen Netzwerks den Zustand der physischen Verbindung jeder Netzwerkschnittstelle des Gateways verifiziert.

11. Verfahren nach einem der vorhergehenden Ansprüche, **dadurch gekennzeichnet, dass** man zur Verbesserung der Ortung des Netzwerks die Gegenwart von Zugangskontrollvorrichtungen zu externen Netzwerken ortet und einen Zugangsvorgang und/oder einen Authentifizierungsvorgang versucht.

12. Vorrichtung zur Verwendung als Home-Gateway, das einem Heimnetzwerkgerät erlaubt, auf Dienstleistungen auf verschiedenen externen Netzwerken zuzugreifen, wobei dieses Home-Gateway mehrere Netzwerkschnittstellen für die Verbindung mit verschiedenen externen Netzwerken umfasst, wobei diese Vorrichtung zumindest einen digitalen Prozessor und eine Softwareanwendung speichernde Speicher umfasst, die bei ihrer Ausführung durch den digitalen Prozessor automatisch das Home-Gateway konfiguriert, indem ein Verfahren nach einem der vorhergehenden Ansprüche durchgeführt wird.

## Claims

1. Method for the automatic configuration of a home gateway allowing a home network device to access services on different external networks, this home gateway comprising several network interfaces for connecting to the different external networks,
**characterized in that** for each service, the gateway comprises a first list of network interfaces called primary interfaces and a second list of network interfaces called secondary interfaces,
A) each time the gateway initializes, the primary lists of said services are analyzed in succession by carrying out the following steps for each primary list and for each primary interface:
a) the status of the physical connection of the primary interface is verified so as to detect an external network; if no network is detected, we move on to the next primary interface;
b) a procedure is initiated in order to obtain an IP address for the gateway in the detected external network; if no IP address is obtained, we move on to the next primary interface;
c) a procedure is initiated in order to obtain routing data; if no routing data is obtained we move on to the next primary interface;
d) a procedure is initiated in order to obtain a list of DNS servers on the detected external network, we move on to the next primary interface;
B) after analysis of the primary lists and when a given service is available via a primary interface, the secondary interfaces of the secondary list corresponding to the available service are analyzed in parallel or sequentially, these secondary interfaces not including the primary interface used by the given service; for each secondary interface, the following steps are carried out:
a) the secondary interface is activated if it is of the "always-on" type,
b) it is verified at regular intervals if the service is still available via the primary interface,
c) if the primary interface becomes unavailable, then
i) the secondary interface is activated if it is of the "dial-on-demand" type,
ii) the routing inputs and the DNS servers if necessary are reconfigured so as to use the secondary interface,
d) the status of the primary interface is monitored, if it becomes available again during a predetermined period:
i) the routing inputs and the DNS servers if necessary are reconfigured so as to use the primary interface, and
ii) the secondary interface is disabled if it is of the "dial-on-demand" type.

2. Method according to claim 1, **characterized in that** in step Aa) the presence of a virtual subnet is detected; if this virtual subnet is not present, we move on to the next primary interface.

3. Method according to claim 2, **characterized in that** for the detection of an external subnet, a "ping" is sent via the current interface.

4. Method according to any one of the preceding claims, **characterized in that** in step Ab), the procedure for obtaining an IP address is carried out by automatic detection of an IP address in the detected external network by using in particular PPP, DHCP or other protocol.

5. Method according to any one of claims 1 to 3, **characterized in that** in step Ab), the procedure for obtaining an IP address consists of retrieving a preconfigured static IP address.

6. Method according to any one of the preceding claims, **characterized in that** in step Ac), the procedure for obtaining routing data is carried out by automatic detection of a routing address in the detected external network by using in particular PPP, DHCP or other protocol.

7. Method according to any one of claims 1 to 5, **characterized in that** in step Ac), the procedure for obtaining routing data consists of retrieving preconfigured static routing data.

8. Method according to any one of the preceding claims, **characterized in that** in step Ad), the procedure for obtaining a list of DNS servers is carried out by automatic detection of DNS parameters in the detected external network by using in particular PPP, DHCP or other protocol.

9. Method according to any one of claims 1 to 7, **characterized in that** in step Ad), the procedure for obtaining a list of DNS servers consists of using statically defined DNS servers.

10. Method according to any one of the preceding claims, **characterized in that** in step Aa), for detecting the external network, the physical link status of each network interface of the gateway is verified.

11. Method according to any one of the preceding claims, **characterized in that** in order to improve the network detection, the presence of devices controlling access to the external networks is detected and an operation of access and/or authentication is attempted.

12. Device used as a home gateway allowing a home network device to access services on different external networks, this home gateway comprising several network interfaces for connecting to the different external networks, this device comprising at least one digital processor and memory spaces storing a software application which, during its execution by the digital processor, automatically configures the home gateway by implementing a method according to any one of the preceding claims.
